# EUROPÄISCHE PATENTSCHRIFT

(11) **EP 2 937 583 B1**
(45) Veröffentlichungstag und Bekanntmachung des Hinweises auf die Patenterteilung: **26.12.2018**
(21) Anmeldenummer: 15165056.1
(22) Anmeldetag: 24.04.2015
(51) Int. Cl.: F16C 19/00, F16C 19/22, F16C 33/46, F16C 33/50

(54) **WÄLZLAGER**
ROLLER BEARING
PALIER À ROULEMENT

(30) Priorität: 25.04.2014 DE 102014207831
(43) Veröffentlichungstag der Anmeldung: 28.10.2015
(73) Patentinhaber: Aktiebolaget SKF, 415 50 Göteborg (SE)
(72) Erfinder: Tanke, Jesko-Henning, 97422 Schweinfurt (DE); Liang, Baozhu, 97456 Hambach (DE); Stephan, Bernd, 97422 Schweinfurt (DE)
(74) Vertreter: Kuhstrebe, Jochen

(56) Entgegenhaltungen:
- EP-A2- 2 414 691
- WO-A2-2012/076583
- DE-A1- 3 245 332
- DE-A1-102009 017 598
- DE-C- 874 683
- FR-A- 1 559 419

## Beschreibung

Die Erfindung betrifft ein Wälzlager mit mindestens einem Innenring und mindestens einem Außenring sowie mindestens einer Reihe Wälzkörper, die zwischen den Lagerringen und mit ihren Achsen auf einem Teilkreis angeordnet sind, wobei die Wälzkörper von einem Käfig gehalten werden, der aus einer Anzahl Käfigsegmenten besteht, wobei jedes Käfigsegment mindestens eine Aufnahmetasche für einen Wälzkörper aufweist.

Insbesondere bei Großlagern haben sich segmentierte Käfige der genannten Art wegen ihrer Beweglichkeit bewährt. Eine solche Lösung zeigt beispielsweise die WO 2012/076583 A2. Die maximale Anzahl an Rollen, die zwischen den Lagerringen platziert werden kann, wird dabei durch die Dicke der Verbindungsstege zwischen seitlichen Platten der Käfigsegmente begrenzt. Diese nehmen nämlich am Teilkreis des Lagers eine gewisse Umfangserstreckung in Anspruch, so dass insofern kein Platz für einen Wälzkörper vorliegt. Diese Begrenzung kann insbesondere auch dem Dokument WO2010/102603 entnommen werden.

Bekannt ist auch eine Lösung, bei der der Käfig aus Eintaschensegmenten besteht, wobei ein solches Segment nur bei jedem zweiten Wälzkörper vorgesehen ist. Hierdurch kann zwar Raum für Wälzkörper gewonnen werden, allerdings auf Kosten der Stabilität der Führung der Wälzkörper.

Bei nichtsegmentierten Lagerkäfigen ist es zudem bekannt, die Verbindungsstege auf verschiedenen radialen Höhen - also innerhalb und außerhalb des Wälzkörperteilkreises auszubilden. Eine solche Ausgestaltung ist jedoch nur bei einteiligen Lagerkäfigen oder Käfigsegmenten, die an jedem zweiten Wälzkörper angeordnet sind, möglich, da sonst jedem Käfigsegment nur ein einzelner Käfigsteg (entweder innerhalb oder außerhalb des Teilkreises) zugeordnet wäre und somit keine Tasche zur Aufnahme von Wälzkörpern ausgebildet werden kann EP 2 414 691 B1 offenbart die Merkmale des Oberbegriffs von Anspruch 1.

Der Erfindung liegt die **Aufgabe** zugrunde, ein Wälzlager der eingangs genannten Art so mit einem Segmentkäfig zu versehen, dass eine sehr stabile Bauweise des Käfigs sichergestellt wird. Gleichzeitig soll es ermöglicht werden, möglichst viele Wälzkörper zwischen den Lagerringen zu platzieren.
Die **Lösung** dieser Aufgabe durch die Erfindung ist dadurch gekennzeichnet, dass jedes Käfigsegment zwei axial beabstandete Seitenplatten umfasst, zwischen denen sich mindestens zwei Stege in axiale Richtung erstrecken, die mit den Seitenplatten verbunden sind, wobei ein erster Steg radial unterhalb des Teilkreises und zu einem Radialstrahl, der durch die Achse des Wälzkörpers verläuft, in Umfangsrichtung versetzt (z. B. nach links) angeordnet ist und wobei ein zweiter Steg oberhalb des Teilkreises so angeordnet ist, dass er zum ersten Steg bezüglich der Achse des Wälzkörpers diametral angeordnet ist (also im Beispielsfall nach rechts versetzt). Dabei ist jeder Wälzkörper von einem Käfigsegment umfasst. Weiterhin sind bei in Umfangsrichtung benachbarten Käfigsegmenten der erste Steg eines ersten Käfigsegments und der zweite Steg eines zweiten benachbarten Käfigsegments in radialer Richtung übereinander angeordnet.
Mit der vorgeschlagenen Lösung wird also ein Konzept vorgeschlagen, mit dem die Stege dergestalt in radialer Richtung übereinander angeordnet sind, dass in Umfangsrichtung Platz für Wälzkörper gewonnen wird. Demgemäß können mehr Wälzkörper in das Lager eingebaut werden, so dass sich die Tragfähigkeit des Lagers erhöht.
Somit wird vorteilhaft dank einer ausreichend großen Breite der Stege in Umgangsrichtung dennoch eine hohe Stabilität des Käfigs gewährleistet; gleichzeitig können mehr Rollen im Lager angeordnet werden, als dies bei vorbekannten Lösungen der Fall ist.
Die Stege erstrecken sich dabei vorzugsweise, gesehen in axiale Richtung, aus dem Bereich der Seitenplatten in Umfangsrichtung heraus und hin zum benachbarten Käfigsegment.

Die Stege sind bevorzugt an ihrer dem sich in der Aufnahmetasche befindlichen Wälzkörper zugewandten Seite mit einer Anlauffläche versehen. Sie können an ihrer von dem sich in der Aufnahmetasche befindlichen Wälzkörper abgewandten Seite mit einer Außenfläche versehen sein. In diesem Falle ist bevorzugt vorgesehen, dass der Abstand zwischen der Außenfläche des Stegs und dem in Umfangsrichtung benachbarten Wälzkörper größer ist als der Abstand zwischen der Anlauffläche des Stegs und dem sich in der Aufhahmetasche befindlichen Wälzkörper.

Bei gleichmäßiger Anordnung der Käfigsegmente über den Umfang ist dabei der in radiale Richtung gemessene Abstand zwischen dem radial innenliegenden Ende des Käfigsegments und einer Innenringlaufbahn oder einem Führungsbord vorzugsweise größer als der in radiale Richtung gemessene Abstand zwischen der Anlauffläche des radial innenliegenden Stegs und dem sich in der Aufnahmetasche befindlichen Wälzkörper. Ferner ist bevorzugt vorgesehen, dass bei gleichmäßiger Anordnung der Käfigsegmente über den Umfang der in radiale Richtung gemessene Abstand zwischen dem radial außenliegenden Ende des Käfigsegments und einer Außenringlaufbahn oder einem Führungsbord größer ist als der in radiale Richtung gemessene Abstand zwischen der Anlauffläche des radial außenliegenden Stegs und dem sich in der Aufhahmetasche befindlichen Wälzkörper.

Das radial außenliegende Ende des Käfigsegments kann durch mindestens einen noppenförmigen Vorsprung gebildet werden, der am Käfigsegment angeordnet, insbesondere angeformt, ist.

Die Stege weisen bevorzugt an ihren radial außenliegenden und radial innenliegenden Enden in jeweiligen Axialschnitten eine lichte Weite auf, die kleiner ist als der Durchmesser des Wälzkörpers. Hiermit wird für den Wälzkörper eine Einschnappfunktion in das Käfigsegment geschaffen.

Bevorzugt weisen zwei in Umfangsrichtung aufeinander folgende Käfigsegmente eine zueinander zumindest abschnittsweise komplementäre, nichtebene Ausformung auf.

Die Käfigsegmente bestehen bevorzugt aus Kunststoff, insbesondere aus faserverstärktem Kunststoff. Allerdings sind generell natürlich auch metallische Werkstoffe möglich.

Das Wälzlager ist bevorzugt ein Kegelrollenlager, ein Pendelrollenlager oder ein Zylinderrollenlager.

Der Käfig ist dabei zumeist dergestalt segmentiert, dass pro Käfigsegment ein Wälzkörper geführt wird. Es ist aber auch genauso möglich, dass ein Käfigsegment mehr als eine Aufnahmetasche aufweist, so dass mit einem Segment mehrere Wälzkörper geführt werden. In diesem Falle gilt die erläuterte Ausgestaltung dahingehend, dass sich mehrere solcher Mehrrollensegmente in Umfangsrichtung aneinander anschließen. Die beschriebene Lösung beschreibt dann auch die Übergänge zwischen benachbarten Segmenten.

Der Käfig besteht gemäß obigen Erläuterungen also zunächst aus zwei Seitenflächen (Seitenplatten), die an den beiden Stirnseiten der Wälzkörper (d. h. der Rollen) angeordnet sind. Die Seitenflächen sind mit den beiden genannten Stegen verbunden. Diese Stege sind einmal unterhalb des Teilkreisdurchmessers der Rollen und einmal oberhalb desselben angeordnet und stehen jeweils aus der direkten Sichtlinie zwischen den Seitenflächen heraus in den durch die Seitenflächen begrenzten Raum des benachbarten Käfigsegments. Die einzelnen Käfigsegmente sind dabei so dimensioniert, dass es in keinem Betriebszustand zu einer Berührung eines Steges mit einem Steg, einer Rolle oder einer Seitenfläche eines benachbarten Käfigsegments kommt.

Jeder Steg kommt über eine Schmiegungsfläche mit der innerhalb des Käfigsegments befindlichen Rolle in Berührung, nicht aber mit einer anderen Rolle. Der kleinste Abstand zwischen einem Steg und einer Rolle des benachbarten Käfigs ist immer größer als Null.

Die Seitenflächen des Käfigsegments sind radial jenseits des Bereiches der beiden Laufbahnen angeordnet. Sie sind so gestaltet, dass bei einer gleichmäßigen Ausrichtung der radial äußersten Stellen zum Innen- bzw. Außendurchmesser der Käfigsegmente zur Lagerachse hin der Abstand zum äußersten bzw. innersten Kontaktbereich immer größer ist, als das Spiel der Rolle innerhalb des Käfigsegments (gemessen in radiale Richtung). Die äu-ßersten Stellen der Käfigsegmente können gegebenenfalls als ausgerundete Erhebungen ausgeführt sein (noppenartige Vorsprünge).

Bevorzugt sind alle Rollen von einem Käfigsegment umgeben. Die Käfige berühren sich jeweils mit ihren in Umfangsrichtung gelegenen Seitenbereichen. Der Käfigsatz hat in seiner Gesamtheit ein Umfangsspiel, das die unterschiedlichen thermischen Dehnungen von Käfigsegmenten und Lagerringen ausgleicht.

Die Stege haben eine Schmiegungsfläche zur innen liegenden Rolle hin. Diese können mit einem Durchmesser ausgeführt sein oder eine andere passende Gestalt haben.

Die Schmiegungsflächen können dabei auch so ausgeführt sein, dass sie eine Schnappfunktion erfüllen, durch welche die Rolle im Käfigsegment gehalten wird, wenn nämlich die lichten Abstände an den radial außenliegenden und innenliegenden Ende der Stege kleiner sind als der Rollendurchmesser. Alternativ kann die Schnappfunktion auch durch lokal plastisch verformte Bereiche eines Nicht-Kunststoffkäfigs realisiert werden.

Die Käfigstege eines Käfigsegments dringen mit einem geeignet gestalteten (nicht-ebenen) Übergang in das Nachbar-Käfigsegment ein, so dass sich zwischen zwei benachbarten Käfigsegmenten eine komplementäre hohlzylindrische Form ergibt.

Die Seitenplatten können optional an ihrem radial inneren und/oder radial äußeren Bereich Ausnehmungen aufweisen. Im nachfolgenden Ausführungsbeispiel ist dies für den radial innenliegenden Bereich der Käfigstege dargestellt.

In der Zeichnung ist ein Ausführungsbeispiel der Erfindung dargestellt. Es zeigen:
- Fig. 1: einen Ausschnitt aus einem Wälzlager, und zwar einem Zylinderrollenlager, wobei ein Käfigsegment zu sehen ist, das einen Wälzkörper führt,
- Fig. 2: in der Darstellung nach Fig. 1 den Ausschnitt aus dem Wälzlager, wobei jetzt ein Axialschnitt (Schnitt A-B gemäß Fig. 7) dargestellt ist,
- Fig. 3: einen Ausschnitt aus dem Wälzlager nach Fig. 1 bzw. Fig. 2 in einem Axialschnitt, wobei hier drei in Umfangsrichtung aufeinander folgende Käfigsegmente zu sehen sind,
- Fig. 4: die Einzelheit "X" gemäß Fig. 3,
- Fig. 5: die Einzelheit "Y" gemäß Fig. 3,
- Fig. 6: den Axialschnitt eines Wälzkörpers zwischen zwei Stegen eines Käfigsegments und
- Fig. 7: die Ansicht eines Käfigsegments, gesehen aus radialer Richtung.

In den Figuren sind ein Wälzlager 1 und Einzelheiten desselben zu sehen, wobei das Wälzlager als Zylinderrollenlager ausgeführt ist. Es weist einen Innenring 2 und einen Außenring 3 auf, wobei zwischen den Ringen 2, 3 Wälzkörper 4 angeordnet sind. Die Achsen M der Wälzkörper 4 liegen auf einem Teilkreis 5; die Wälzkörper 4 weisen einen Durchmesser Dw auf.

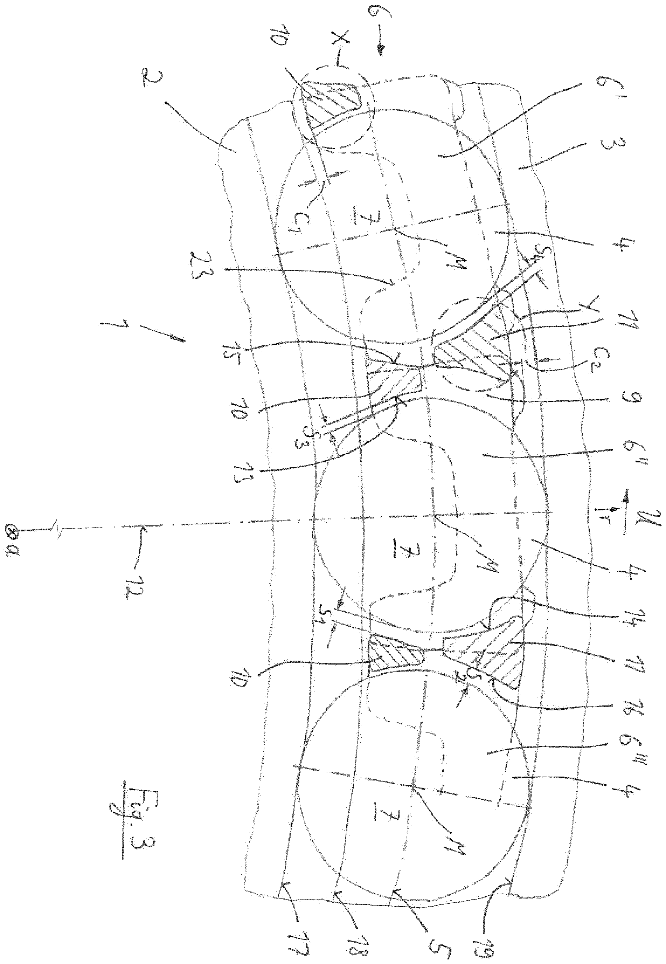

Die Wälzkörper 4 werden durch einen Käfig 6 in der gewünschten Position gehalten, wobei der Käfig 6 aus einzelnen Käfigsegmenten 6', 6", 6" besteht, die in Umfangsrichtung U aufeinander folgend angeordnet sind, s. hierzu Fig. 3, wo drei Käfigsegmente dargestellt sind. Jedes Käfigsegment 6', 6", 6"' hat eine Aufhahmetasche 7 für einen Wälzkörper 4.

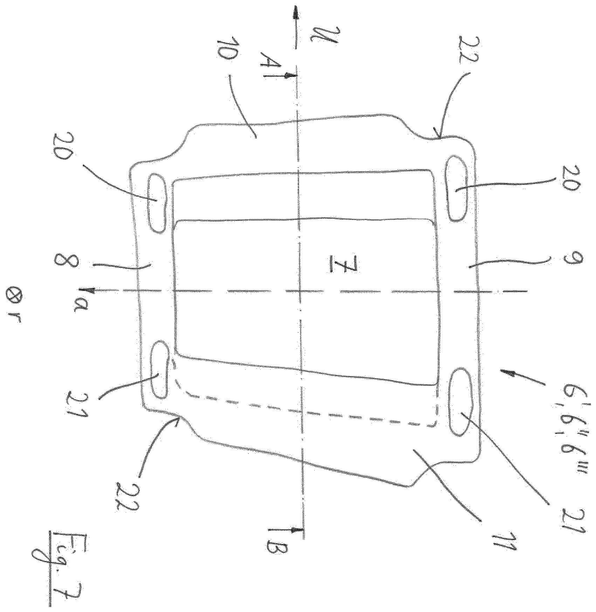

Jedes Käfigsegment 6', 6", 6"' weist zwei Seitenplatten 8 auf, s. hierzu auch Fig. 7, aus der dies am besten hervorgeht, wobei die Seitenplatten 8 jeweils über zwei Stege 10 und 11 miteinander verbunden sind. Die beiden Seitenplatten 8, 9 sind in axialer Richtung a voneinander beabstandet; der Abstand wird durch die beiden Stege 10 und 11 gehalten.

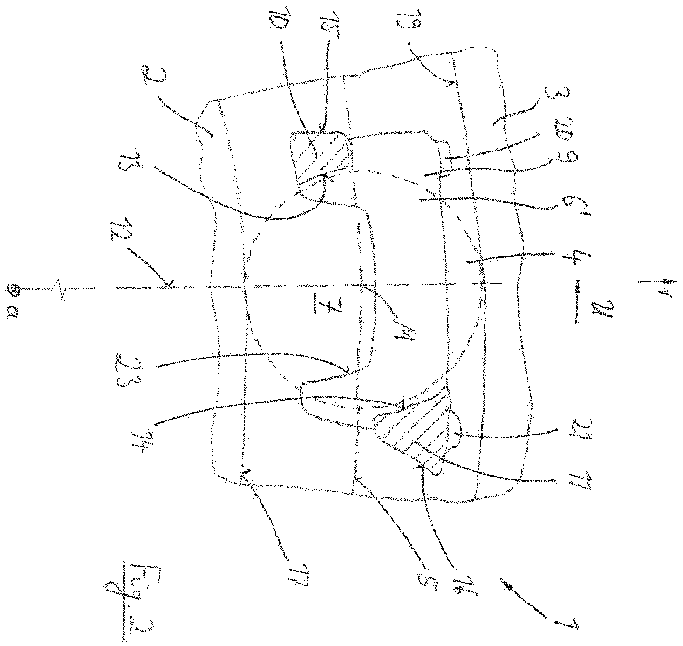

Wesentlich ist, dass der eine (erste) Steg 10 unterhalb des Teilkreises 5 und zu einem Radialstrahl 12, der durch die Achse M des Wälzkörpers 4 verläuft, in Umfangsrichtung U versetzt angeordnet ist (in Fig. 2 ist dies gut zu erkennen, wo der Steg 10 vom Radialstrahl 12 aus gesehen nach links versetzt ist). Indes ist der andere (zweite) Steg 11 oberhalb des Teilkreises 5 so angeordnet ist, dass er zum ersten Steg 10 bezüglich der Achse M des Wälzkörpers 4 diametral angeordnet ist (in Fig. 2 ist gut zu sehen, dass der Steg 11 vom Radialstrahl 12 aus gesehen nach rechts versetzt ist).

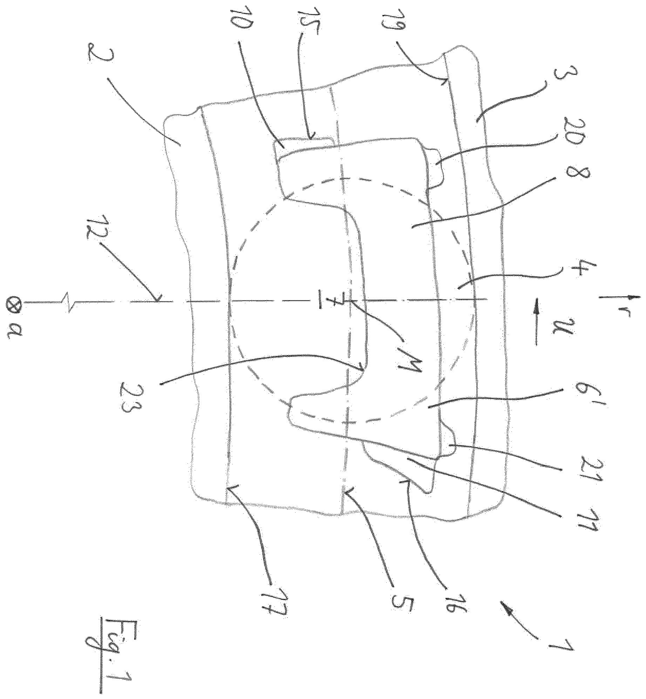

Während in den Figuren 1 und 2 noch die Innenringlaufbahn 17 und die Außenringlaufbahn 19 skizziert ist, ist ein Führungsbord 18 bzw. dessen radial nach außen weisende Führungsfläche nur in Fig. 3 angedeutet.

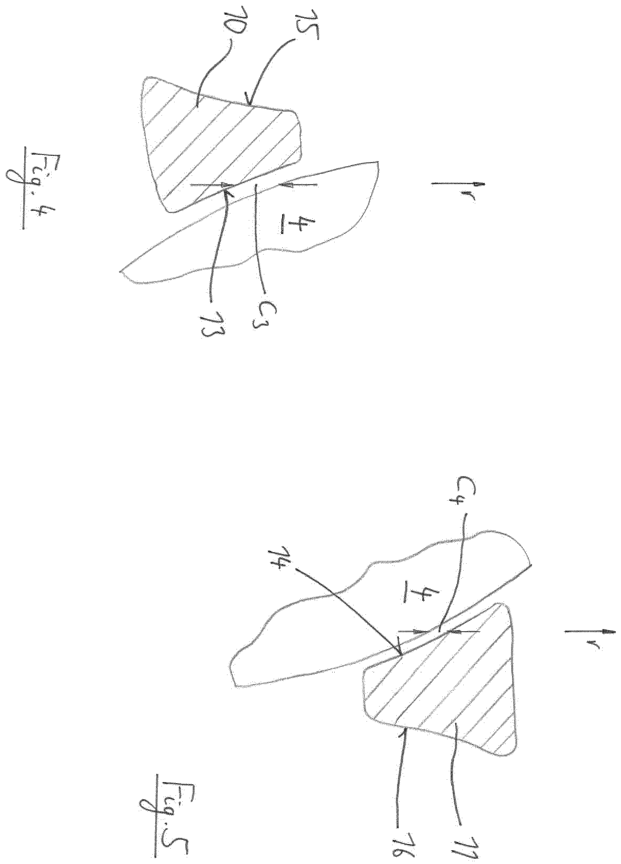

Wie aus der Zusammenschau der Figuren - insbesondere aus den Figuren 4 und 5 - weiter hervorgeht, hat der Steg 10 eine Anlauffläche 13 für den Wälzkörper 4 und der Steg 11 entsprechend eine Anlauffläche 14 für den Wälzkörper 4. An der anderen, vom Wälzkörper 4 abgewandten Seite hat der Steg 10 eine Außenfläche 15 und der Steg 11 eine Außenfläche 16. Die Ausformung der Anlaufflächen 13, 14 wird in der Regel kreisbogenförmig erfolgen, dies ist allerdings nicht zwingend; eine analoge Ausgestaltung kann auch für die Außenflächen 15 und 16 vorgesehen werden.

Das Käfigsegment 6', 6", 6"' ist weiterhin an seiner radial außenliegenden Fläche mit Vorsprüngen 20 und 21 versehen; deren Lage kann in Fig. 7 gesehen werden. Die Vorsprünge 20, 21 sind noppenartig ausgestaltet.

In Fig. 7 ist noch zu erkennen, dass das Käfigsegment 6', 6", 6"' in seinen in Umfangsrichtung U liegenden Endbereichen mit einer nicht-ebenen Ausformung 22 versehen; diese Ausformung 22 ist so gestaltet, dass zwei in Umfangsrichtung U zusammenstoßende Käfigsegment 6', 6", 6"' hier komplementär zueinander passen und so eine im wesentlichen hohlzylindrische Käfigstruktur bilden.

Zu der Wahl der geometrischen Größen ist folgendes zu sagen:
Wie aus Fig. 3 hervorgeht, lässt sich ein Abstand s₁ definieren, der den Abstand der Außenfläche 15 des Stegs 10 zum benachbarten Wälzkörper 4 markiert; entsprechend ergibt sich der Abstand s₂ als Distanz zwischen der Außenfläche 16 des Stegs 11 zum benachbarten Wälzkörper 4. Ein Abstand s₃ liegt zwischen der Anlauffläche 13 des Stegs 10 und dem geführten Wälzkörper 4 vor, ein Abstand s₄ zwischen der Anlauffläche 14 des Stegs 11 und dem geführten Wälzkörper 4.

Für die Größe des Gesamtspiels, d. h. das Spiel in Umfangsrichtung und aufsummiert über alle Abstände s₁, s₂, s₃ bzw. s₄ erfolgt nach fachmännischen Gesichtspunkten, so dass eine hinreichende Führung der Wälzkörper gegeben, indes kein Verklemmen der Wälzkörper zu befürchten ist.

Es gilt, dass der Abstand s₁ bzw. s₂ zwischen den Außenflächen 15, 16 und dem in Umfangsrichtung U benachbarten Wälzkörper 4 größer ist als der Abstand s₃ bzw. s₄ zwischen der Anlauffläche 13, 14 und dem sich in der Aufhahmetasche 7 befindlichen Wälzkörper 4. So wird ein unerwünschter Kontakt des benachbarten Käfigsegments mit dem geführten Wälzkörper verhindert.

In der Zusammenschau der Figuren 3, 4 und 5 ergibt sich weiter folgendes: In radiale Richtung r gemessen lassen sich Abstände c₁, c₂, c₃ und c₄ definieren: Der Abstand c₁ ist der Abstand des radial innenliegenden Endes des Käfigsegments 6', 6", 6"' vom Führungsbord 18. Der Abstand c₂ ist der Abstand des radial außenliegenden Endes des Käfigsegments 6', 6", 6"' von der Außenringlaufbahn 19 (unter Berücksichtigung der Vorsprünge 20 und 21). Der Abstand c₃ (s. Fig. 4) ist der radiale Abstand der Anlauffläche 13 vom Wälzkörper 4; der Abstand c₄ (s. Fig. 5) ist der radiale Abstand der Anlauffläche 14 vom Wälzkörper 4.

Es gilt hier, dass bei gleichmäßiger Anordnung der Käfigsegmente 6', 6", 6"' über den Umfang U der Abstand c₁ größer ist als der Abstand c₃. Ferner ist bei gleichmäßiger Anordnung der Käfigsegmente 6', 6", 6"' über den Umfang U der Abstand c₂ größer als der Abstand c₄.

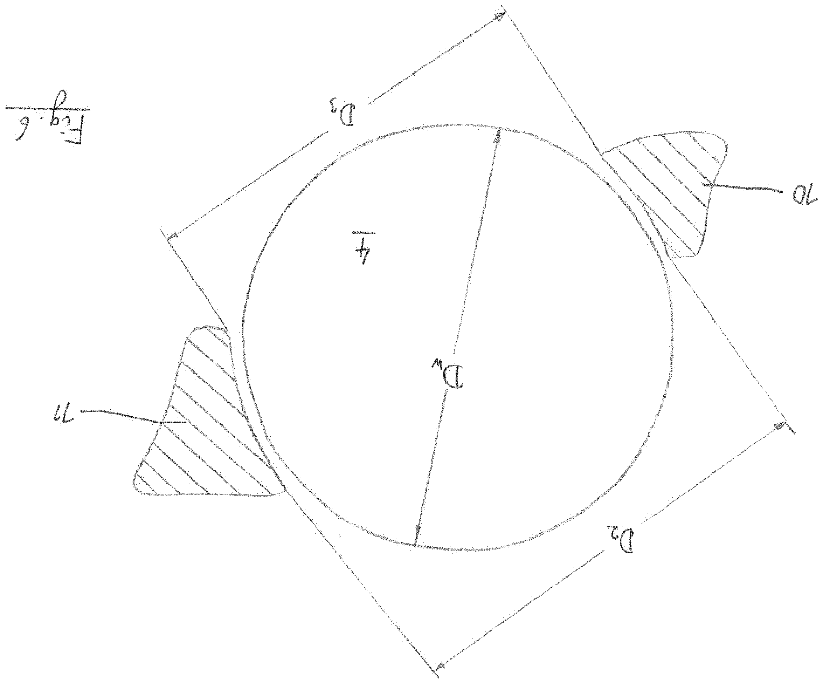

Aus Fig. 6 geht noch eine weitere bevorzugte Ausgestaltung hervor: Um eine Einschnappfunktion für die Wälzkörper 4 in die Aufnahmetasche 7 zu schaffen, ist vorgesehen, dass die Stege 10, 11 an ihren radial außenliegenden und radial innenliegenden Enden in jeweiligen Axialschnitten eine lichte Weite D₂ bzw. D₃ aufweisen, die kleiner ist als der Durchmesser Dw des Wälzkörpers 4.

In den Figuren 1 bis 3 ist noch eine weitere Fortbildung zu sehen: Die Seitenplatten 8, 9 weisen hier im radial innenliegenden Bereich zwischen ihren beiden in Umfangsrichtung liegenden Endbereichen Ausnehmungen 23 auf. Diese hier in radial innenliegenden Bereich vorgesehenen Ausnehmungen 23 können alternativ oder additiv auch im radial au-ßenliegenden Bereich vorgesehen werden.

## Patentansprüche

1. Wälzlager (1) mit mindestens einem Innenring (2) und mindestens einem Außenring (3) sowie mindestens einer Reihe Wälzkörper (4), die zwischen den Lagerringen (2, 3) und mit ihren Achsen (M) auf einem Teilkreis (5) angeordnet sind, wobei die Wälzkörper (4) von einem Käfig (6) gehalten werden, der aus einer Anzahl Käfigsegmenten (6', 6", 6"') besteht, wobei jedes Käfigsegment (6', 6", 6"') mindestens eine Aufhahmetasche (7) für einen Wälzkörper (4) aufweist, und jeder Wälzkörper (4) von einem Käfigsegment (6', 6", 6"') umgeben ist, wobei jedes Käfigsegment (6', 6', 6") zwei axial (a) beabstandete Seitenplatten (8, 9) umfasst, zwischen denen sich mindestens zwei Stege (10, 11) in axiale Richtung (a) erstrecken, die mit den Seitenplatten (8, 9) verbunden sind,
**dadurch gekennzeichnet, dass**
ein erster Steg (10) unterhalb des Teilkreises (5) und zu einem Radialstrahl (12), der durch die Achse (M) des Wälzkörpers (4) verläuft, in Umfangsrichtung (U) versetzt angeordnet ist und wobei ein zweiter Steg (11) oberhalb des Teilkreises (5) so angeordnet ist, dass er zum ersten Steg (10) bezüglich der Achse (M) des Wälzkörpers (4) diametral angeordnet ist, wobei weiterhin bei den in Umfangsrichtung (U) aufeinanderfolgenden Käfigsegmenten (6', 6", 6"') der erste Steg (10) des einen Käfigsegments (6"; 6"') und der zweite Steg (11) des anderen Käfigsegments (6'; 6") in radialer Richtung übereinander angeordnet sind.

2. Wälzlager nach Anspruch 1, **dadurch gekennzeichnet, dass** sich die Stege (10, 11), gesehen in axiale Richtung (a), aus dem Bereich der Seitenplatten (8, 9) in Umfangsrichtung (U) heraus erstrecken.

3. Wälzlager nach Anspruch 1 oder 2, **dadurch gekennzeichnet, dass** die Stege (10, 11) an ihrer dem sich in der Aufnahmetasche (7) befindlichen Wälzkörper (4) zugewandten Seite mit einer Anlauffläche (13, 14) versehen sind.

4. Wälzlager nach einem der Ansprüche 1 bis 3, **dadurch gekennzeichnet, dass** die Stege (10, 11) an ihrer von dem sich in der Aufnahmetasche (7) befindlichen Wälzkörper (4) abgewandten Seite mit einer Außenfläche (15, 16) versehen sind.

5. Wälzlager nach Anspruch 3 und 4, **dadurch gekennzeichnet, dass** der Abstand (s₁, s₂) zwischen der Außenfläche (15, 16) des Stegs (10, 11) und dem in Umfangsrichtung (U) benachbarten Wälzkörper (4) größer ist als der Abstand (s₃, s₄) zwischen der Anlauffläche (13, 14) des Stegs (10, 11) und dem sich in der Aufnahmetasche (7) befindlichen Wälzkörper (4).

6. Wälzlager nach einem der Ansprüche 1 bis 5, **dadurch gekennzeichnet, dass** bei gleichmäßiger Anordnung der Käfigsegmente (6', 6", 6"') über den Umfang (U) der in radiale Richtung (r) gemessene Abstand (c₁) zwischen dem radial innenliegenden Ende des Käfigsegments (6', 6", 6"') und einer Innenringlaufbahn (17) oder einem Führungsbord (18) größer ist als der in radiale Richtung (r) gemessene Abstand (c₃) zwischen der Anlauffläche (13) des radial innenliegenden Stegs (10) und dem sich in der Aufnahmetasche (7) befindlichen Wälzkörper (4).

7. Wälzlager nach einem der Ansprüche 1 bis 6, **dadurch gekennzeichnet, dass** bei gleichmäßiger Anordnung der Käfigsegmente (6', 6", 6"') über den Umfang (U) der in radiale Richtung (r) gemessene Abstand (c₂) zwischen dem radial außenliegenden Ende des Käfigsegments (6', 6", 6"') und einer Außenringlaufbahn (19) oder einem Führungsbord größer ist als der in radiale Richtung (r) gemessene Abstand (c₄) zwischen der Anlauffläche (14) des radial außenliegenden Stegs (11) und dem sich in der Aufhahmetasche (7) befindlichen Wälzkörper (4).

8. Wälzlager nach einem der Ansprüche 1 bis 7, **dadurch gekennzeichnet, dass** das radial außenliegende Ende des Käfigsegments (6', 6", 6"') durch mindestens einen noppenförmigen Vorsprung (20, 21) gebildet wird, der am Käfigsegment (6', 6", 6"') angeordnet, insbesondere angeformt, ist.

9. Wälzlager nach einem der Ansprüche 1 bis 8, **dadurch gekennzeichnet, dass** die Stege (10, 11) an ihren radial außenliegenden und radial innenliegenden Enden in jeweiligen Axialschnitten eine lichte Weite (D₂, D₃) aufweisen, die kleiner ist als der Durchmesser (Dw) des Wälzkörpers (4).

10. Wälzlager nach einem der Ansprüche 1 bis 9, **dadurch gekennzeichnet, dass** zwei in Umfangsrichtung (U) aufeinander folgende Käfigsegmente (6', 6", 6"') eine zueinander zumindest abschnittsweise komplementäre, nichtebene Ausformung (22) aufweisen.

11. Wälzlager nach einem der Ansprüche 1 bis 10, **dadurch gekennzeichnet, dass** die Käfigsegmente (6', 6", 6"') aus Kunststoff bestehen, insbesondere aus faserverstärktem Kunststoff.

12. Wälzlager nach einem der Ansprüche 1 bis 11, **dadurch gekennzeichnet, dass** es ein Kegelrollenlager, ein Pendelrollenlager oder ein Zylinderrollenlager ist.

## Claims

1. Anti-friction bearing (1) having at least one inner ring (2), at least one outer ring (3) and at least one row of rolling bodies (4) which are arranged between the bearing rings (2, 3) and with their axes (M) on a pitch circle (5), the rolling bodies (4) being held by a cage (6) which consists of a number of cage segments (6', 6", 6"'), each cage segment (6', 6", 6"') having at least one receiving pocket (7) for a rolling body (4), and each rolling body (4) being surrounded by a cage segment (6', 6",6"'), each cage segment (6' 6', 6") comprising two side plates (8, 9) which are spaced apart axially (a) and between which at least two webs (10, 11) extend in the axial direction (a), which webs (10, 11) are connected to the side plates (8, 9), **characterized in that** a first web (10) is arranged below the pitch circle (5) and offset in the circumferential direction (U) with respect to a radial line (12) which runs through the axis (M) of the rolling body (4), and a second web (11) being arranged above the pitch circle (5) in such a way that it is arranged with respect to the first web (10) diametrically with regard to the axis (M) of the rolling body (4), the first web (10) of the one cage segment (6''; 6"') and the second web (11) of the other cage segment (6'; 6") being arranged above one another in the radial direction, furthermore, in the case of the cage segments (6', 6", 6"') which follow one another in the circumferential direction (U).

2. Anti-friction bearing according to Claim 1, **characterized in that**, as viewed in the axial direction (a), the webs (10, 11) extend out of the region of the side plates (8, 9) in the circumferential direction (U).

3. Anti-friction bearing according to Claim 1 or 2, **characterized in that** the webs (10, 11) are provided with a thrust surface (13, 14) on their side which faces the rolling body (4) which is situated in the receiving pocket (7).

4. Anti-friction bearing according to one of Claims 1 to 3, **characterized in that** the webs (10, 11) are provided with an outer surface (15, 16) on their side which faces away from the rolling body (4) which is situated in the receiving pocket (7).

5. Anti-friction bearing according to Claims 3 and 4, **characterized in that** the spacing (s₁, s₂) between the outer surface (15, 16) of the web (10, 11) and the rolling body (4) which is adjacent in the circumferential direction (U) is greater than the spacing (s₃, s₄) between the thrust surface (13, 14) of the web (10, 11) and the rolling body (4) which is situated in the receiving pocket (7).

6. Anti-friction bearing according to one of Claims 1 to 5, **characterized in that**, in the case of a uniform arrangement of the cage segments (6', 6", 6"') over the circumference (U), the spacing (c₁), measured in the radial direction (r), between the radially inner end of the cage segment (6', 6",6"') and an inner ring raceway (17) or a guide rim (18) is greater than the spacing (c₃), measured in the radial direction (r), between the thrust surface (13) of the radially inner web (10) and the rolling body (4) which is situated in the receiving pocket (7).

7. Anti-friction bearing according to one of Claims 1 to 6, **characterized in that**, in the case of a uniform arrangement of the cage segments (6', 6", 6"') over the circumference (U), the spacing (c₂), measured in the radial direction (r), between the radially outer end of the cage segment (6', 6",6"') and an outer ring raceway (19) or a guide rim is greater than the spacing (c₄), measured in the radial direction (r), between the thrust surface (14) of the radially outer web (11) and the rolling body (4) which is situated in the receiving pocket (7).

8. Anti-friction bearing according to one of Claims 1 to 7, **characterized in that** the radially outer end of the cage segment (6', 6", 6"') is formed by way of at least one stud-shaped projection (20, 21) which is arranged, in particular integrally formed, on the cage segment (6', 6",6"').

9. Anti-friction bearing according to one of Claims 1 to 8, **characterized in that**, at their radially outer and radially inner ends, the webs (10, 11) have a clear span (D₂, D₃) in respective axial sections, which clear span (D₂, D₃) is smaller than the diameter (D_{w}) of the rolling body (4).

10. Anti-friction bearing according to one of Claims 1 to 9, **characterized in that** two cage segments (6', 6", 6"') which follow one another in the circumferential direction (U) have a non-planar shaped-out formation (22) which is complementary to one another at least in sections.

11. Anti-friction bearing according to one of Claims 1 to 10, **characterized in that** the cage segments (6', 6", 6"') consist of plastic, in particular of fibre-reinforced plastic.

12. Anti-friction bearing according to one of Claims 1 to 11, **characterized in that** it is a tapered roller bearing, a self-aligning roller bearing or a cylindrical roller bearing.

## Revendications

1. Palier à roulement (1) comprenant au moins une bague intérieure (2) et au moins une bague extérieure (3) ainsi qu'au moins une rangée de corps de roulement (4) qui sont disposés entre les bagues de palier (2, 3) et de telle sorte que leurs axes (M) soient disposés sur un cercle de référence (5), les corps de roulement (4) étant retenus par une cage (6) qui est constituée d'un certain nombre de segments de cage (6', 6", 6"'), chaque segment de cage (6', 6",6"') comprenant au moins une cavité de réception (7) pour un corps de roulement (4), et chaque corps de roulement (4) étant entouré par un segment de cage (6', 6", 6"'), chaque segment de cage (6', 6", 6"') comportant deux plaques latérales (8, 9) espacées axialement (a), entre lesquelles s'étendent au moins deux éléments de liaison (10, 11) dans la direction axiale (a), lesquels sont reliés aux plaques latérales (8, 9), **caractérisé en ce**
**qu'**un premier élément de liaison (10) est disposé en dessous du cercle de référence (5) et de manière décalée dans la direction périphérique (U) par rapport à un rayon (12) qui passe par l'axe (M) du corps de roulement (4), et un deuxième élément de liaison (11) étant disposé au-dessus du cercle de référence (5) de manière diamétralement opposée au premier élément de liaison (10) par rapport à l'axe (M) du corps de roulement (4) et, en outre dans le cas de segments de cage (6', 6", 6"') successifs dans la direction périphérique (U), le premier élément de liaison (10) de l'un des segments de cage (6" ; 6"') et le deuxième élément de liaison (11) de l'autre segment de cage (6' ; 6") étant superposés dans la direction radiale.

2. Palier à roulement selon la revendication 1, **caractérisé en ce que** les éléments de liaison (10, 11) s'étendent, vus dans la direction axiale (a), à partir de la région des plaques latérales (8, 9) dans la direction périphérique (U).

3. Palier à roulement selon la revendication 1 ou 2, **caractérisé en ce que** les éléments de liaison (10, 11) sont pourvus d'une surface de butée (13, 14) sur leur côté tourné vers le corps de roulement (4) se trouvant dans la cavité de réception (7).

4. Palier à roulement selon l'une quelconque des revendications 1 à 3, **caractérisé en ce que** les éléments de liaison (10, 11) sont pourvus d'une surface extérieure (15, 16) sur leur côté opposé au corps de roulement (4) se trouvant dans la cavité de réception (7) .

5. Palier à roulement selon les revendications 3 et 4, **caractérisé en ce que** la distance (s₁, s₂) entre la surface extérieure (15, 16) de l'élément de liaison (10, 11) et le corps de roulement (4) adjacent dans la direction périphérique (U) est supérieure à la distance (s₃, s₄) entre la surface de butée (13, 14) de l'élément de liaison (10, 11) et le corps de roulement (4) se trouvant dans la cavité de réception (7).

6. Palier à roulement selon l'une quelconque des revendications 1 à 5, **caractérisé en ce qu'**en cas d'agencement régulier des segments de cage (6', 6", 6"') sur la périphérie (U), la distance (c₁), mesurée dans la direction radiale (r), entre l'extrémité radialement intérieure du segment de cage (6', 6",6"') et un chemin de roulement de bague intérieure (17) ou un épaulement de guidage (18) est supérieure à la distance (c₃), mesurée dans la direction radiale (r), entre la surface de butée (13) de l'élément de liaison (10) radialement intérieur et le corps de roulement (4) se trouvant dans la cavité de réception (7).

7. Palier à roulement selon l'une quelconque des revendications 1 à 6, **caractérisé en ce qu'**en cas d'agencement régulier des segments de cage (6', 6", 6"') sur la périphérie (U), la distance (c₂), mesurée dans la direction radiale (r), entre l'extrémité radialement extérieure du segment de cage (6', 6", 6"') et un chemin de roulement de bague extérieure (19) ou un épaulement de guidage est supérieure à la distance (c₄), mesurée dans la direction radiale (r), entre la surface de butée (14) de l'élément de liaison (11) radialement extérieur et le corps de roulement (4) se trouvant dans la cavité de réception (7).

8. Palier à roulement selon l'une quelconque des revendications 1 à 7, **caractérisé en ce que** l'extrémité radialement extérieure du segment de cage (6', 6", 6"') est formée par au moins une saillie (20, 21) en forme d'ergot qui est disposée, en particulier formée, sur le segment de cage (6', 6", 6"').

9. Palier à roulement selon l'une quelconque des revendications 1 à 8, **caractérisé en ce que** les éléments de liaison (10, 11) présentent, à leurs extrémités radialement extérieures et radialement intérieures, dans des coupes axiales respectives, un écartement (D₂, D₃) qui est inférieur au diamètre (D_{w}) du corps de roulement (4).

10. Palier à roulement selon l'une quelconque des revendications 1 à 9, **caractérisé en ce que** deux segments de cage (6', 6", 6"') successifs dans la direction périphérique (U) comprennent des parties conformées (22) non planes, complémentaire l'une à l'autre au moins dans certaines régions.

11. Palier à roulement selon l'une quelconque des revendications 1 à 10, **caractérisé en ce que** les segments de cage (6', 6", 6"') sont constitués de plastique, en particulier de plastique renforcé par des fibres.

12. Palier à roulement selon l'une quelconque des revendications 1 à 11, **caractérisé en ce qu'**il s'agit d'un palier à rouleaux coniques, d'un palier à rotule sur rouleaux ou d'un palier à rouleaux cylindriques.
